(19) **Europäisches Patentamt**

**European Patent Office**

**Office européen des brevets**

(11) Publication number: **0 405 815 B1**

(12) **EUROPEAN PATENT SPECIFICATION**

(45) Date of publication of patent specification: **20.07.94**    (51) Int. Cl.5: **G02F 1/135**, G02F 1/136

(21) Application number: **90306637.1**

(22) Date of filing: **19.06.90**

(54) **Spatial light modulators.**

(30) Priority: **23.06.89 GB 8914453**

(43) Date of publication of application:
**02.01.91 Bulletin 91/01**

(45) Publication of the grant of the patent:
**20.07.94 Bulletin 94/29**

(84) Designated Contracting States:
**CH DE FR GB LI NL**

(56) References cited:
EP-A- 0 142 326
EP-A- 0 147 027
EP-A- 0 151 508
US-A- 4 699 498

J. PHYS. E: SCI. INSTRUM., vol. 21, 1988,
pages 460-466, IOP Publishing Ltd, GB; J.
WAHL et al.: "Experimental driver and ad-
dressing techniques for ferroelectric liquid
crystal devices"

IEE PROCEEDINGS, vol. 133, pt. J, no. 1,
February 1986, pages 77-82; I. UNDERWOOD
et al.: "Evaluation of an nMOS VLSI array for
an adaptive liquid-crystal spatial light
modulator"

(73) Proprietor: **NORTHERN TELECOM LIMITED**
**World Trade Center of Montreal,**
**380 St. Antoine Street West, 8th Floor**
**Montreal, Ouebec H2Y 3Y4(CA)**

(72) Inventor: **Crossland, William Alden**
**15 School Lane**
**Harlow, Essex(GB)**
Inventor: **Collings, Neil**
**33 Rue du Clos**
**CH-2034 Pefbux(CH)**
Inventor: **Vass, David**
**Department of Physics,**
**University of Edinburgh**
**Mayfield Road, Edinburgh EH9 3JZ(GB)**

(74) Representative: **Laurence, Simon French et al**
**Northern Telecom Europe Limited**
**Patents and Licensing**
**West Road**
**Harlow, Essex CM20 2SH (GB)**

## Description

This invention relates to spatial light modulators.

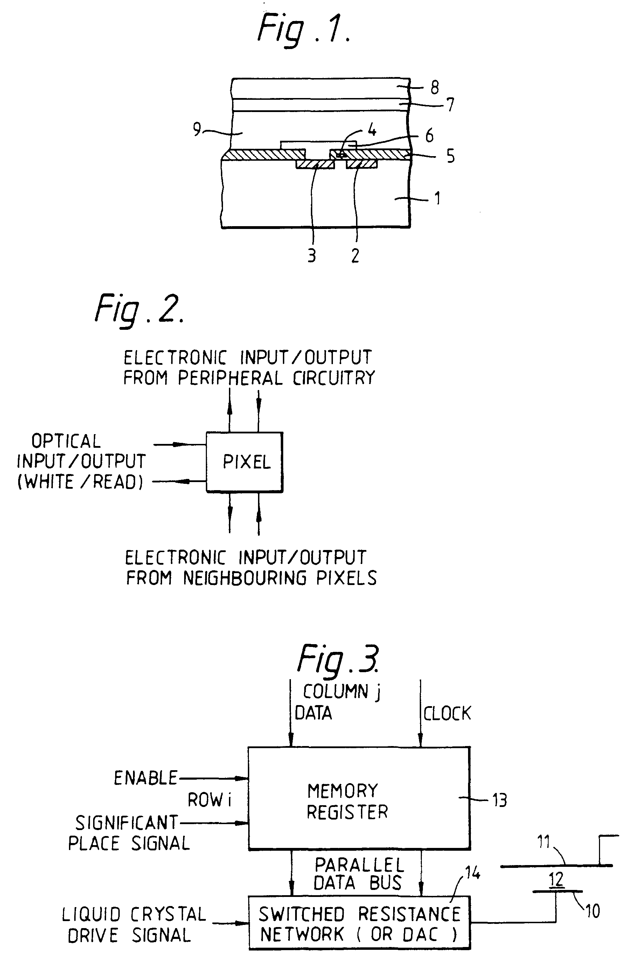

The design of electrically addressed spatial light modulators (SLM) has been influenced to a great extent by the displays industry, although there are major differences between the requirements for good displays and those for SLMs. Typically a conventional liquid crystal display as illustrated in Fig. 1 and which may form the basis of an SLM, comprises a silicon substrate 1, an FET comprised by source and drain regions 2, 3 and a gate 4 in a silicon dioxide layer 5 which is apertured to provide electrical contact between a transparent electrode 6 and drain 3. Another transparent electrode 7 is provided on a transparent panel 8. A liquid crystal, for example a ferro-electric effect chiral smectic liquid crystal material 9 is disposed between the electrodes 6 and 7. The cell (pixel) may be operated by applying a control signal to the gate such that the electrode 6 is driven to a positive or negative voltage relative to the other electrode 7 so as to switch the ferro-electric liquid crystal material between its two stable states, i.e. cause it to appear light or dark, for example. Attention is directed to our GB patents 2149555B (which is equivalent to EP-A-0142326), 2149176B, 2166256B and 2188742B, which describe various aspects of the structure and operation of ferro-electric liquid crystal displays.

A second important electro-optic effect in chiral smectic liquid crystals is the "electroclinic effect" which uses the "soft mode" dielectric response (Bahr C.H. and Heppke G, Liq. cryst, 2(6), 825-831, 1981; Collings N., Crossland W.A., Chittick R.C. and Bone M.F., Proc. SPIE, 963, (in print), 1989). This electroclinic effect is capable of a sub-microsecond response as is the ferro-electric effect, but the electroclinic effect also gives an analogue response to the voltage, that is the optic axis of the liquid crystal medium rotates (in plane of the liquid crystal layer) by an amount that is proportional to the applied voltage. Switching times of several hundred nanoseconds have been observed (Davey A.B. and Crossland W.A., Second International Conference on Ferro-electric Liquid Crystals, Goteberg, Sweden, June 1989) and also significant optical responses at voltages compatible with silicon integrated circuits.

In principle, electro-optic effects in chiral smectic liquid crystals may alter the amplitude and/or phase of incident light.

The electo-optic effects in ferro-electric liquid crystals (tilted chiral smectic phases, such as Sm C*) utilise the Goldstone mode dielectric relaxation which in principle allows phase modulation of light beams as well as intensity modulation (Tomas Car-Ison, Boštjar Žekš, Cene Filipič and Adrijan Levslik, Ferro-electric, 1988, Vol 84, pp 223-240). This arises because the n director of the liquid crystal, which coincides with the optic axis, is not constrained to move only in a plane orthogonal to the light beam. It can adopt any position on a cone of angles. This out of plane movement is often suppressed in the realisation of electro-optic effects, for example in so-called "surface stabilised" devices (N.A. Clark and S.T.Lagerwall, Appl. Phys. Lett. 36, 899, 1980). This, however, need not necessarily be the case (W.A. Crossland, M. Bone, P.W. Ross, Proc. S.I.D., Vol 29, No. 3, pp 237-244, 1988).

The electroclinic effect in chiral smectic A liquid crystal utilises the soft mode dielectric relaxation, which in the device geometry normally used (Bahr. C.H. and Heppke - see above) does not allow analogue modulation in the phase of a normally incident light beam, because the principal optic axis is rotated by electric fields only in a plane orthogonal to the light beam.

For both "stabilised" Goldstone mode devices (ferro-electric) or electroclinic (soft mode) devices, the phase of an incident light beam can be modulated by the electro-optic effect when the angle of incidence of the light is not parallel to the plane of the smectic layers, or orthogonal to the plane containing the movement of the optic axis

In EP-A-0151508 there is described a flat panel display including a plurality of pixel elements with first electronic circuitry for controlling the switching of the liquid crystal material and further electronic circuitry for providing electrical signal processing and conditioning. The further electronic circuitry is provided by physically separate elements of semiconductor material which are located between the electrodes of the pixel elements.

According to one aspect of the present invention there is provided a smart pixel comprising a chiral smectic liquid crystal light modulator including a chiral smectic liquid crystal material disposed between a semiconductor substrate carrying a first electrode and a panel carrying a second electrode, first electronic circuitry formed in the semiconductor substrate in the vicinity of the first electrode for changing the state of the liquid crystal material and further electronic circuitry which is such as to provide electrical signal processing and conditioning, characterised in that the further electronic circuitry is formed in the semiconductor substrate in the vicinity of the first electrode, and in that the pixel includes one or more photodetectors arranged such that the pixel can be optically addressed.

According to another aspect of the present invention there is provided a device comprising an array of smart pixels, each according to the preceding paragraph, and including means whereby electronic signals are transmitted between the smart pixels.

Embodiments of the invention will now be described with reference to the accompanying drawings, in which:

Fig. 1 illustrates a cross-section through a conventional liquid crystal display;

Fig. 2 illustrates input/output to a smart pixel;

Fig. 3 illustrates schematically one embodiment of the smart pixel;

Fig. 4 illustrates schematically another embodiment of smart pixel;

Fig. 5 illustrates optical implementation of matrix-vector multiplication;

Fig. 6 illustrates a conventional spatial light modulator;

Fig. 7 illustrates schematically a photodetector/threshold circuitry smart pixel embodiment;

Fig. 8 indicates a possible circuit for part of the pixel of Fig. 7;

Fig 9 illustrates an array of photosensors, modulators and microcircuits;

Fig 10 illustrates three views a, b and c (perspective, plan and elevation) of an optical interconnect scheme between array devices.

Fig 11 illustrates an example of a circuit for a pixel of a hybrid optical processing array;

Fig 12 illustrates an alternative circuit to that of Fig 11, and

Fig 13 illustrates a truth table showing the logic functions provided by the circuit of Fig 12.

In a conventional spatial light modulator the pixels respond to a digital or analogue voltage. The present invention is concerned with special spatial light modulators i.e. so-called smart pixels. The notion of smart pixels arises when "localised intelligence" is included at the pixel (light modulator). Such localised intelligence includes, for example, static memory, digital to analogue conversion and photodetector/threshold circuitry, examples of which and other possibilities will be described hereinafter. This local intelligence is provided by extra circuitry to that provided for the basic switching function of the modulator, which is described above as an FET. The extra circuitry can be formed at the same area of the substrate as the modulator or at least in its vicinity.

The marriage of chiral liquid crystal and single crystal silicon VLSI substrate technologies is believed currently to offer the best prospects for smart pixel devices. With silicon VLSI technology, submicron feature sizes are predicted. This means that a useful amount of circuitry can be collected under a single pixel light modulator of says 100 microns square. The chiral liquid crystal technology, which includes ferro-electric and electroclinic effects, offers large electro-optic modulation effects at comparatively low voltages. Therefore, much finer line technologies than, are possible with, for example, PLZT modulators can be exploited. In addition, the total power dissipation, which is not inconsiderable in more sophisticated versions of these devices benefits from the low capacitance and low operating voltage of the chiral crystal material. All electro-optic modulation possibilities can be catered for; binary amplitude (ferro-electric); binary phase (ferro-electric); analogue amplitude (electroclinic); and analogue phase (electroclinic or ferro-electric).

Thus it can be said that the smart pixel notion arises when the individual light modulator elements (pixels) are additionally associated with electronic circuitry and optical detectors that allow electronic conditioning or processing of signals or data within the pixels, or the electronic communication of data between pixels. From this direction it can be considered that more functionality is being added to the pixel. From a second direction the notion of an electronic island, which is equivalent to a smart pixel, is arrived at.

In an optimised electro-optic system the size of the smart pixels might correspond to the distance over which it is more efficient to communicate using electronics rather than optics. For silicon logic operating at the fastest possible clock frequencies this size might be in the range of 100's of microns to millimetres. However, this is not to say that systems may rely on smart pixel structures where the pixel size is less than this value.

The most general smart pixel (Fig. 2) in an array of such pixels can receive data from three sources: electronic input from the peripheral circuitry; electronic input from the neighbouring pixel circuitry; and optical input from distant arrays. The pixel transmits data to the peripheral circuitry (when it is acting as a pure photodetector), to neighbouring pixels (when some local neighbourhood operation or scrolling is required), or back into the optical realm via the liquid crystal modulator.

A conventional arrangement used for driving nematic liquid crystal pixels in display devices is shown in Fig. 1. A similar arrangement may be used to drive ferro-electric liquid crystal pixels in spatial light modulators. The objectives of adapting this arrangement in ferro-electric liquid crystal SLMs is to reduce the time required to address one frame of data compared with a directly multiplexed array of pixels, and to improve the contrast ratio, perhaps from 100:1 to a much larger value.

In Fig. 1 a switching transistor is provided at each pixel to switch it on or off. There is an active backplane containing one switching transistor, as illustrated, at each pixel so that the pixel circuitry resembles a Dynamic Random Access Memory (DRAM) cell with the ferro-electric liquid crystal as the capacitor dielectric. Such an arrangement is not however "smart.

With a DRAM pixel structure as described above and active backplane addressing there are row and column conductors. The rows are connected to the gates of the transistors, the columns to the sources and the pixel pads (electrodes) to the drains. The power dissipation in chiral smectic liquid crystal modulator arrays is low. Due to the high resistivity of the liquid crystal (resistivity of order $10^{10}$ Ω cm) the pixel behaves as a capacitor with negligible leakage. Consequently, the power is dissipated in the transistor drivers and the conducting tracks to the pixels.

For DRAM type cells using chiral smectic liquid crystals on silicon technology there are limitations when we try to increase the spontaneous polarisation of the liquid crystal, in an attempt to decrease switching time and increase frame rate. Such problems may be greatly reduced at the expense of increased pixel complexity by using pixel circuitry resembling static RAM memory cells such that the electro-optic switching does not occur in an isolated capacitor, rather the pixel capacitor voltage is maintained by supplying dc voltages to each pixel. SLM with pixel circuitry resembling static RAM memory cells and employing the substantially slower nematic liquid crystals have previously been proposed. The present invention, however proposes smart pixels based on silicon integrated circuit technology (VLSI) together with chiral smectic liquid crystals and photodetectors. The use of chiral smectic liquid crystal upon silicon VLSI technology is advantageous since the speed of one technology complements that of the other whilst minimising power dissipation. Static RAM memory cells using chiral smectic liquid crystals are only one example of smart pixels i.e. pixels with "localised intelligence" provided thereat, or, in other words, pixels incorporating signal processing and conditioning.

There are various applications in optical signal/information processing where smart SLMs (pixels) may be employed. The pixel may be optically or electrically addressed with the light modulation being binary or analogue in amplitude or phase.

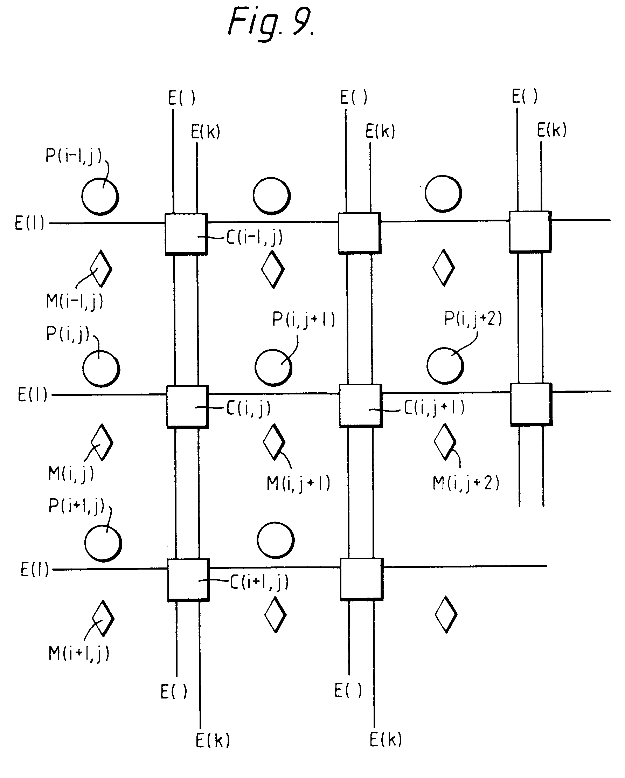

In digital optical processing, the arithmetic and logic operations relating two image arrays may be implemented using seven basic operations involving nearest neighbour pixels (left, right, up, down; or N, S, E, W, (north, south, east, west)). These are the shift operators (left, right, up, down), the array complement operator, a substitutional operator (which detects a target pattern and replaces it by an "icon" pattern everywhere in the image) and an array OR operator operating pixel by pixel on the two images. The basic logic operations may be realised very conveniently using smart binary pixels as the processing arrays. The adaptive interconnects between the logic arrays may be specified by an N x N optical cross-bar switch. A smart binary pixel may also be used to provide temporary storage of data images. Digital optical processing will be discussed in greater detail hereinafter with reference to Figs 9 to 13.

In optical processors, for example, coherent processors although this is not restricted to coherent processors, SLMs of high quality may be used in the input plane or as adaptive spatial filters in the Fourier transform plane to perform image enhancement and pattern recognition tasks in real time. The most general and fundamental procedure required in a coherent system is the precise analogue modulation of the amplitude and phase of the wavefront of a light beam having a well-defined wave vector. In advanced systems having several optical paths the superposition of many precisely modulated beams may be required. The phasor nature of the coherent superposition places severe restraints on the acceptable variations in phase if spurious intensity modulations are to be avoided. High optical flatness (~ λ/100nm in reflecting devices) and homogeneity are needed to limit spurious phase variations to ≤ 0.1rads for optimum performance. Smart pixels with DAC circuitry in each pixel, to be described hereinafter, enable these severe mechanical tolerances to be relaxed by providing the facility to tune the optical response over the area of the device.

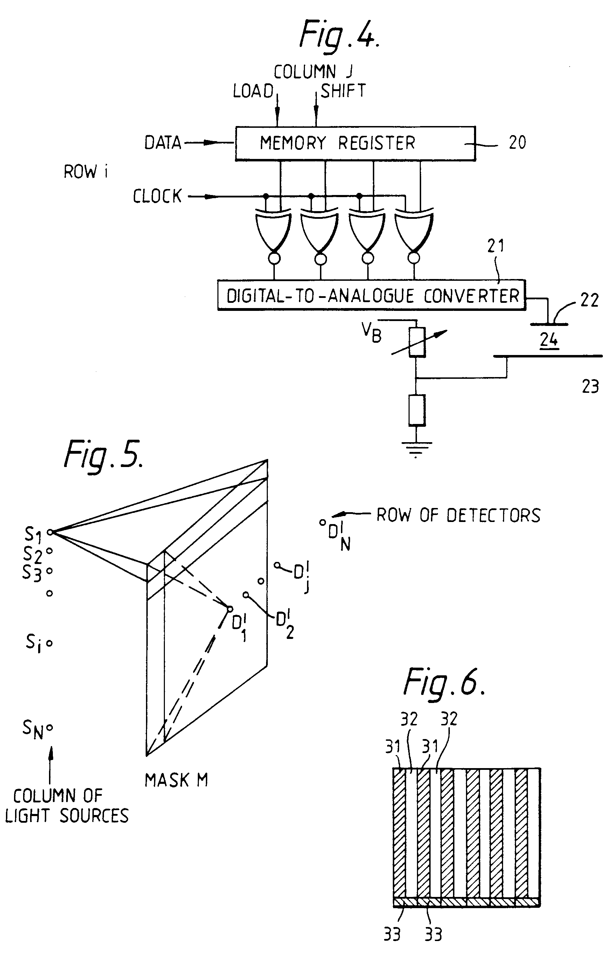

A basic smart analogue SLM which has a grey scale facility may have smart pixels which incorporate the functions shown in Fig. 3. The pixel is the (i,j)th of an array. A pixel electrode/mirror 10 is provided on a semiconductor substrate. There is a counter electrode 11 overlying a chiral smectic liquid crystal layer 12. There is a memory register 13 and a switched resistance network (or DAC - digital to analogue converter) 14. A liquid crystal drive signal is applied to network 14. The drive signal may be derived from any of the following:-

(a) a common power rail in order to give the same constant voltage to all pixels;

(b) an external D.C. or A.C. (i,.e. clocked) voltage source;

(c) a voltage signal generated by the intensity of the light incident on a photosensor within the pixel circuitry;

(d) a voltage signal generated by interrogating neighbouring pixels.

The drive signal is tuned to the pixel electronically using network or DAC 14. A 3-bit controlled network can provide 8 levels of amplitude control on the signal applied across the liquid crystal layer in each pixel. Operation may be as follows. Following reset, a "significant place" signal is broadcast to inform the silicon array that a data record about to be transmitted constitutes the bit pattern for the most significant grey level of an image. For each pixel the signal on the row "data" line is gated by the column "enable" pulse into the most significant bit of the memory register and this in turn sets the "resistance ladder" (or DAC) to modify the liquid crystal drive signal fed to the mirror/electrode of the pixel. Next, the "significant place" signal is activated again to route the next data bit into the next significant bit of the memory register. This, of course, causes further modification of the liquid crystal drive signal. The process continues until the least significant bit is loaded or until writing of the image is aborted by a microcomputer controlling the operation when, for example, an appropriate feature of significance in the image is detected. With appropriate design of the resistance network/DAC, the silicon backplane may be used in certain circumstances to (a) tune out mechanical defects in the SLM, (b) display grey level patterns at increasing levels of detail and (c) if the liquid crystal drive signal is derived from the intensity of light falling on the pixel, to perform arithmetic operations on the light reflected from the pixel mirror. Aspect (c), is also applicable to binary addressed SLMs and will be discussed in greater detail hereinafter, particularly with reference to neural networks.

Fig. 4 illustrates an embodiment of smart pixel circuitry which produces phase modulation at 8 values (at $2n\pi$, $(2n-1)\pi$ and 6 intermediate values, n being determined by the optical thickness of the cell). Data is loaded into the static memory register 20 and a data word $D_3 D_2 D_1 D_0$ used to control the resistance network in the DAC 21. The analogue output of DAC 21 is set so that the input $D_3 D_2 D_1 D_0$ generates a signal $(V_B/2 + V_D)$ and the complemented input $D_3 D_2 D_1 D_0$ generates $(V_B/2 - V_D)$. With the XNOR arrangement shown, the voltage on the pixel mirror 22 oscillates at the clock frequency with an amplitude $V_D$ about a mean dc level of $1/2 V_B$. The voltage bias on the counter electrode 23 ensures that there is no mean d.c. voltage across the liquid crystal 24 to cause degradation.

In digital image processing it is often essential following the capture of a scene to detect edges and contours and then to segment the image as the preliminary stage of processing. For those tasks requiring real time analysis of large data arrays, optical pre-processing may be necessary and therefore there is need for smart pixels capable of performing basic processing at high speed. This may be realised on a silicon chip by fabricating an input array of photodetectors interspaced with an optical array of light modulating pixels, formed by a liquid crystal layer over a small aluminium mirror evaporated directly on the silicon surface. The optical transmission of each pixel is controlled by the voltage drive signal fed to the mirror electrode, which drive signal is determined by the states of the neighbouring photodiodes. By incorporating appropriately designed digital circuitry in each pixel the reflected read light from the device can provide an output image with enhanced edges, improved contrast or a segmented image, as required, from a noisy input image. These pixels operate in reflection mode, but pixels operating in transmission mode are possible at wavelengths greater than one micron, in which case there are no aluminium mirrors.

Neural networks are parallel distributed systems for processing information in a nonalgorithmic way and are basically pattern recognition systems. Typical applications are for error correcting subsystems in optical communications links, for associated memories in computing systems and for maintaining and controlling production lines where precise analytical procedures are not feasible and the control system has to be trained using expert knowledge. Optics is regarded as a promising technology for neural networks because of the ability to provide, economically, massively parallel interconnections. Common features uniting many neural network architectures are the multiplication of an input vector by a matrix of weights, followed by the application of a non-linear threshold to the components of the product vector. For those neural networks which can be represented mathematically by a matrix-vector multiplication, a conventional arrangement for the optical implementation of such a neural network is shown in Fig. 5 of the accompanying drawings. An input vector $\underline{S} = [S_1 S_2....S_N]^T$ is realised as a column of stabilised light sources each of which illuminates uniformly a single row of elements in a mask (matrix) $M = [M_{ij}]$. Optical routing devices (lenses or holograms) ensure that the light passing through the jth column of the mask is collected by the photodetector $D'_j$. The output vector is the row $\underline{D'} = [D'_1 D'_2....D'_N]$. The intensity $I_j$ of the light falling on the jth photodetector is

$$I_j = \sum_i I_o S_i M_{ij}.$$

For example, in the Hopfield model [J.J. Hopfield, Proc. Natl. Acad. Sci. USA $\underline{79}$, 2554-58 (1982)], $S_i$ takes binary values, $M_{ij}$ may take analogue values in the range 0 to 1 and the threshold is "hard". $I_o$ is the intensity when only one source and one mask element are fully on. In the simplest version, a feedback arrangement is required which switches the source $S_j$ according to the conditions.

$S_j = 1$ (ON) when $I_j > \theta_j$

$S_j = 0$ (OFF) when $I_j \leq \theta_j$

where $\theta_j$ is a controllable threshold value. This is a "hard" threshold example.

When an arbitrary input vector is presented by forcing a pattern on the light sources for a short period, the system responds by finding and displaying the nearest matching pattern stored in the mask. If an adaptive mask with a temporary memory (i.e. an SLM) is used, the net may be trained to store target patterns for later recall by similar, but not necessarily identical input patterns.

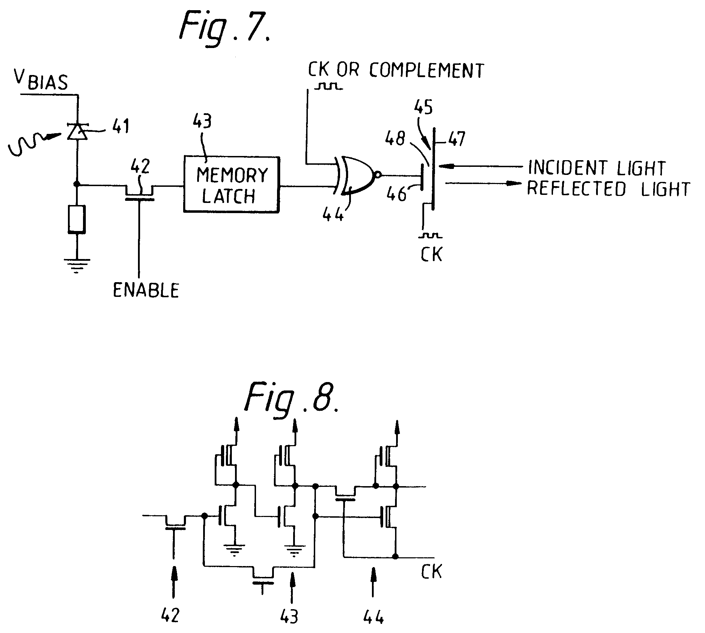

An optical neural network is described in "Designs and devices for optical bidirectional associative memories" C. Guest et al. Applied Optics. Vol. 26, No. 23, 1 December 2987 p. 5055 -5060. A compact bidirectional associative memory implementation described therein employs a spatial light modulator device which comprises an array of single element detectors paired with optical modulators of a similar form. Light falling on a detector causes its associated modulator to become more transparent. The known spatial light modulator shown in Fig. 6 of the accompanying drawings consists of alternating stripes of silicon photodetectors 31, and electro-optic modulators 32. The signal for each detector is amplified and thresholded by silicon drive circuitry 33 that then drives the associated modulator. Two such device arrays orientated orthogonally with a connection matrix therebetween are used to implement an optical bidirectional associative memory. It is suggested in the aforementioned article that such spatial light modulator devices may be comprised by a hybrid system with silicon detectors and circuitry and PLZT modulators. According to the present invention it may be comprised by a smart pixel incorporating a photodetector, a liquid crystal modulator cell and appropriate drive circuitry and formed by a chiral smectic liquid crystal on silicon technology. Fig. 7 illustrates the function of the circuitry on which such a smart pixel is based. It comprises a photodetector 41, a pass transistor 42, a memory latch 43, an XNOR arrangement 44 and a liquid crystal modulator cell 45 including a pixel mirror 46 and a counter electrode 47 between which the liquid crystal 48 is disposed. Fig. 8 illustrates a possible arrangement of transistors which comprise the pixel circuit i.e. the pass transistor 42, the memory latch 43 and the XNOR 44.

This circuitry shows how the circuit functions might be carried out using an electro-optic medium (e.g. a liquid crystal) that responds to the RMS applied voltage. In the cases considered here of the effects in chiral smectic liquid crystals, this circuitry would be modified to reflect the polarity sensitive response of these electro-optic materials.

The threshold $\theta_j$ at which the pixel latch may be triggered when the pass transistor is ENABLED is determined by the voltage bias, $V_{bias}$. The latch is therefore set or reset depending on the total intensity of the light incident in the photodetector (photodiode) 41. The output of the memory latch controls through the XNOR arrangement the voltage drive signal applied to the mirror electrode. The provision of the latch means that an applied voltage can be removed without the voltage on the pixel (liquid crystal) decaying. A universal clock signal CK or its complement is applied to the XNOR arrangement and the clock signal CK is applied to the counter electrode. The complement input enables image reversal to be performed and is used to ensure that there is no net d.c. bias applied across the liquid crystal. Depending on the condition of the ENABLE input, the cell may be run asynchronously or with clocked synchronous logic. The circuitry elements of Fig. 7 may all be formed in silicon technology and the liquid crystal may extend over the detector as well as the modulator provided that the liquid crystal is always transmitting over the detector and there is some method of isolating the modulator drive circuit from photoactuation by light falling on the detector. Attention is directed to our co-pending GB Application 8911917.6 (Serial No.       ) (N. Collings - 8) the contents of which are incorporated herein by reference which describes use of photodetector/threshold circuitry smart pixel as a neural plane for neural network applications.

Various examples of smart pixel constituent parts and functions are summarised in the following, namely:

1. Photodiode; latch; hard limit threshold and ferro-electric liquid crystal modulator. An array of such smart pixels can provide an implementation of a Hopfield neural network.

2. Photodiode; latch; AND/OR logic in association with neighbouring N, S, E, W pixels and ferro-electric modulator.

An array of such smart pixels can implement the basic operations of binary image algebra.

3. Photodiode; latch; N, S, E, W connections and ferro-electric modulator.

Such smart pixels can be employed, for example, in an optical correlator where there is the possibility of spatial variance limiting the system or where a coordinate transformation is being performed and it is important to centre the image correctly, in which case lateral motion of a captured image could be important.

4. as 3 and with detection circuitry at the periphery of the array.

A smart pixel photodetector array for recognising sequences of correlation peaks can thus be achieved.

5. One photodiode associated with a line of modulators and with hard wired logic so that the photodiode can switch one modulator on while the rest remain off.

This arrangement is an important component for SLM cross bar switches.

6. Latch; resistance ladder; ferro-electric/electroclinic modulator.

This can implement the DAC function.

7. 64 element photodiode array; microprocessor; 64 ferro-electric modulators.

This can implement a 64-channel optical bus interconnected between processors.

The above description refers only to examples of possible smart pixels. The exact integrated circuitry associated with the pixel will clearly vary in dependence on the intended function of the smart pixel. In order to use silicon area economically the integrated circuitry should be positioned under the light modulator (mirror) and provide an active backplane therefore. This requires that a planarisation technique be employed to produce optically flat surfaces over the integrated circuitry.

The localised intelligence at the modulator referred to above may comprise localised pointwise operations at the modulator, for example a Sobel operator which is a weighted sum of nearest neighbour pixel values in the case of pixels disposed in arrays. Electrical signal processing and conditioning at a pixel may, for example, comprise thresholding. By providing one or more photodetectors at each pixel the intelligence could be modified optically in addition to electronically.

Digital optical processing using smart pixels will now be discussed in greater detail. It is well known in digital image processing that a machine to implement any arbitrary binary logic function relating two 2-D bit arrays of data (binary images) may be constructed using a combination of logic gates selected from a basic set.

A typical basic set of logic gates, functions or operators is:

1. An identity operator which leaves the 2-D bit array unchanged.

2. Shift left, right, up and down operators which produce movement of the image relative to the array indices by displacement of the complete image a single bit to the left, right, up or down.

3. An array complement operator which replaces the logic value in each pixel of the array by its logical complement.

4. A NAND operator which generates the logical NAND between the data value in a pixel of one image and that in the corresponding pixel of the second image.

Another desirable operator is a substitutional operator which detects a pattern in an image and replaces that pattern everywhere by another (substitutional) pattern.

A hybrid electronic-optical device which can form the basic element for an optical logic processor or computer is illustrated schematically in Fig 9. The device consists of a 2-dimensional array of smart pixels fabricated on a substrate. Each pixel has (a) a photosensor P to detect an optical input signal (b) a transducer to modulate an interrogating light beam, or a source to generate a light beam, as an optical output signal and (c) microcircuitry fabricated on the substrate to control the modulation of the optical output beam. In Fig 9, $P(i,j)$ represents the photosensor, $M(i,j)$ the modulator (or source) and $C(i,j)$ the microcircuitry for the pixel in the $i^{th}$ row and $j^{th}$ column of the array ($i$ = 1, 2, ...$\ell$ and $j$ = 1, 2, .... m).

The operation of the microcircuitry at each pixel is controlled by electrical signals $E(1)$, $E(2)$ ... $E(n)$ broadcast to all pixels in the array. Neighbouring pixels are interconnected so that the optical output signal $L(i,j)$ from the $(i,j)^{th}$ pixel depends on the input light signals $B(i,j)$, $B(i + 1, j)$, $B(i-1,j)$, $B(i,j + 1)$ ... etc applied to the $(i,j)^{th}$ pixel and its neighbours, the precise response being determined by the values of the electrical input signal $E(k)$, $k = 1,....n$. By arranging that the response is as specified in the Boolean expressions ("An adaptive Fourier optical processor", I Underwood, P H Wilson, R M Sillitto and D G Vass, Proc SPIE $\underline{860}$, 2-8 (1987)), or equivalent relationships, all of the basic 2-dimensional logic processing functions discussed above can be realised in a single device and selected under electrical control.

$$L (i,j) = R(i,j).\overline{E}(6) + \overline{R}(i,j).E(6) \qquad (1)$$

Where

$$\overline{R}(i,j) = \overline{E}(1). B(i,j) + \overline{E}(2). B(i,j-1) + \overline{E}(3)B(i,j + 1) + \overline{E}(4). B(i-1,j) + \overline{E}(5). B(i + 1,j)$$

Valid output signals are obtained for all pixels having

$i$ = 2, 3 ..., ($\ell$-1)

and

$j$ = 2, 3, ..., (m-1) The function in equation (1) can be realised by many different variants of this logic expression. De Morgan's theorem allows interchange of AND and OR function, for example.

In principle the individual pixels can each be programmed to perform a specific logic operation independently by including a sufficiently large number of electrical control signals or, more efficiently, by providing memory registers in the microcircuitry at each pixel to store the control code. Powerful processing arrays without pixel memory registers can also be fabricated by partitioning the array into a few sub-arrays either in contiguous blocks or interlaced so that while each pixel in a sub-array performs identically, the sub-arrays may carry out different optical logic operations if necessary.

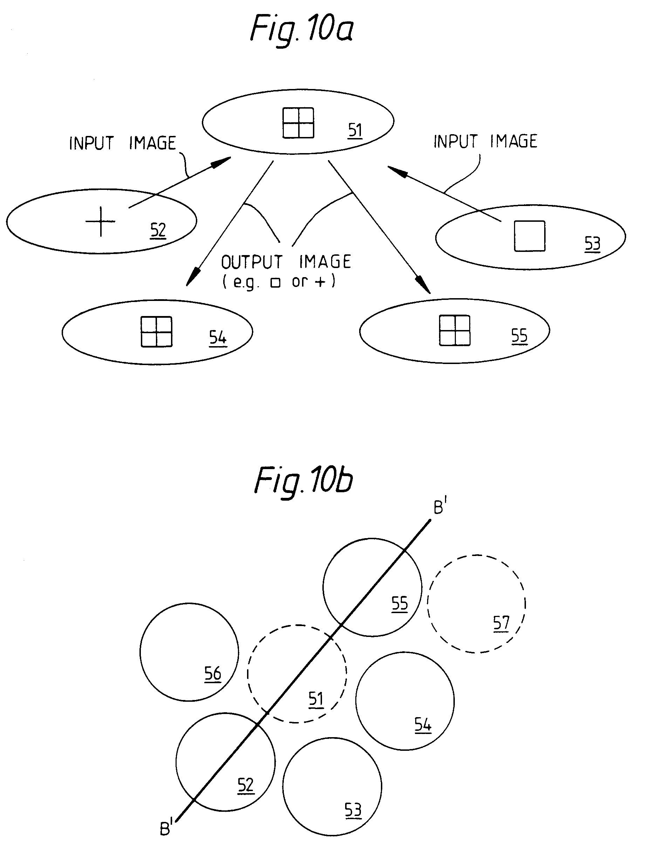

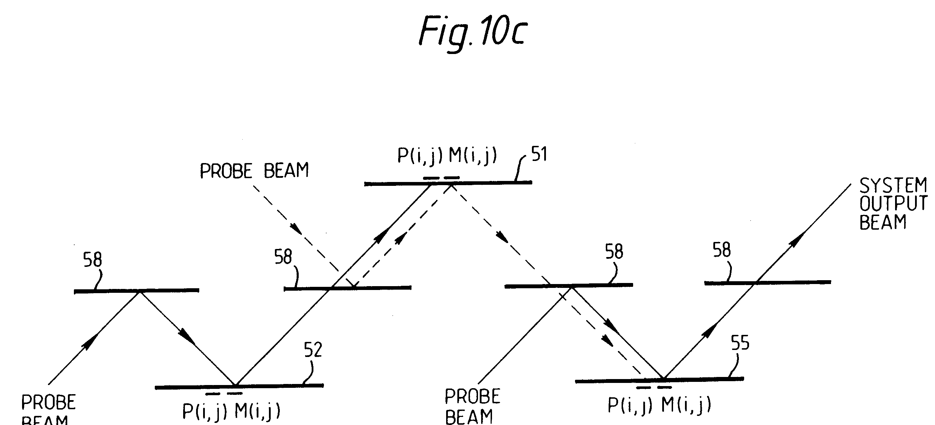

How this is used in a system will now be discussed with reference to Fig 10 (a, b and c) in which a hybrid processing array 51 is connected into a system with arrangements to receive the output images from at least two other arrays (52 and 53) accurately registered onto its photosensors. The array 51 also transmits the output image from its modulators to the input photosensors on at least two other arrays (54 and 55) again accurately in register pixel by pixel. The imaging optics is not shown in detail in Fig 10 but it may be implemented using standard lenses and beam splitters (58), holographic elements, lenslet arrays and/or integrated optics techniques.

By assembling systems using standard optical interconnects and the standard hybrid electronic-optical processing arrays, versatile optical logic processors or computers can be assembled from only a few types of modulator units. The logical architecture is determined thereafter by the electrical signals. The information is carried between logic gates by restored optical signals.

As discussed above with reference to Fig 1 etc, the computing/processing devices can be constructed using advanced silicon microfabrication and liquid crystal technologies. The inclusion of photodiodes or phototransistors as the photosensors fabricated on the single crystal silicon substrate or in amorphous silicon films grown on the surface, is a straightforward process. Clearly there are several microcircuit fabrication technologies which are compatible with the provision of photosensors, photo-emitters and light modulators in integrated devices, or at least in compact devices, and these can therefore be used to fabricate the hybrid processing array.

Two example implementations will now be referred to. The first relates to implementation of the identity, shift and complement operations. Common $E(k)$ signals are broadcast to all pixels of an array for each k value, $k = 1, \dots 6$. For a cascade of q arrays the following operations can clearly be performed.

(i) A data image may be transmitted through the cascaded system unchanged and in the same relative position to the array indices, i.e. the identity operation can be performed.
This is achieved by setting
$E(1) = O, E(2) = E(3) = E(4) = E(5) = E(6) = 1$
on all devices in the cascade.

(ii) An image may be shifted r bits to the left where $r < q$. This is achieved by setting, for example,
$E(3) = O, E(1) = E(2) = E(4) = E(5) = E(6) = 1$
on r arrays and
$E(1) = O, E(2) = E(3) = E(4) = E(5) = E(6) = 1$
on the remaining (q - r) arrays in the cascade. The shift right, up and down operations may be obtained in an analogous way. It should be noted that feedback techniques whereby an image leaving the cascade is subsequently fed back to the input of the cascade may be employed to produce images shifted by a number of bits longer than q. Also, by electrically coupling the last row to the first row and the last column to the first column, the rotate operators may be realised.

(iii) The array complement operation may be performed by setting
$E(1) = O, E(2) = E(3) = E(4) = E(5) = 1$ and
$E(6) = O$ on any array.

The second example implementation is of the array NOR operation relating two data images. In order to perform the NOR operation between two images it is necessary to arrange that the data signals for the first <u>image $I(p,q)$ use only the odd columns of a pixel array</u>, and the data signals for the second image $I'(p',q')$ use only the even columns of an array. The two images may then be accommodated in an interlaced format on a single device. When superimposing, pixel by pixel, the two data images on an array to form the interlaced data set, it is necessary to ensure that the even columns of the device inputting image $I(p,q)$ are all set to the dark state and correspondingly for image $I'(p',q')$, that all of the odd columns are set in the dark state. With images $I(p,q)$ projected on the odd columns and $I(p',q')$ on the even columns, the pixelwise NOR operation on the images can be performed by a hybrid device with its electrical inputs to all pixels set to the following logic states:

$E(1) = E(3) = E(6) = O$ and $E(2) = E(4) = E(5) = 1$

The results of the NOR operations are returned at the outputs to the odd columns of the array.

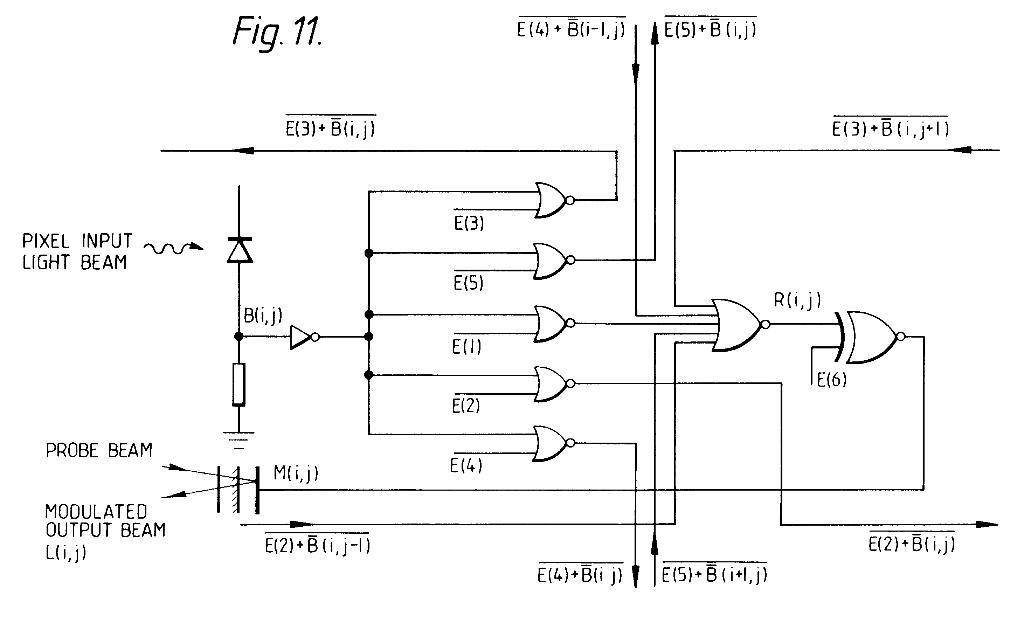

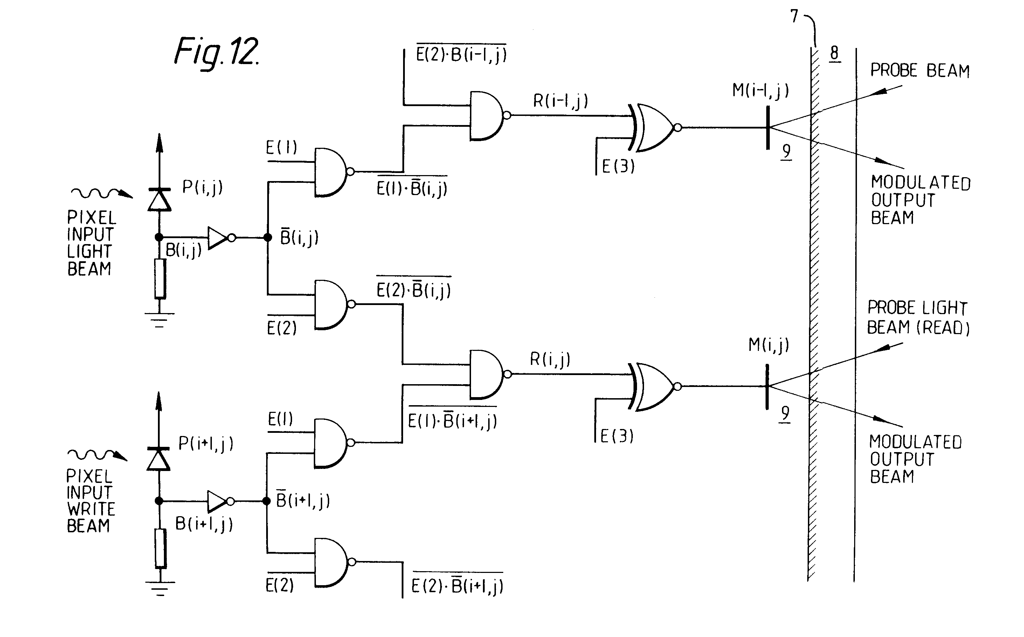

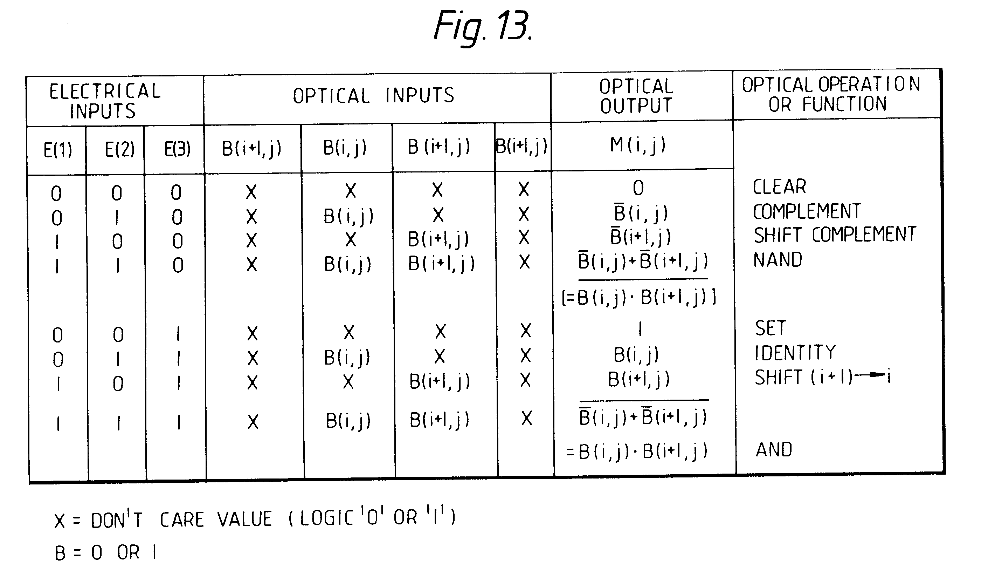

A typical circuit for a smart pixel of a hybrid optical processing array is shown in Fig 11 and is considered to be self-explanatory. A less complicated but nevertheless still powerful processor may be fabricated based on the pixel circuit employed in Fig 12 which is part of a pixel array and includes two such circuits. Fig 12 is similarly considered to be self-explanatory. The truth table showing the logic functions available with this device is presented in Fig 13.

The invention provides so-called smart pixels which are distinguished from conventional spatial light modulators in that they have other types of electronic and optical functionality present at the pixels in addition to the conventional electronic component placed at the pixel so that it can be turned on an off by means of an electrical signal. By providing this additional circuitry by silicon VLSI technology and in particular by building the liquid crystal devices over the silicon VLSI circuitry, extreme circuit complexibility and flexibility can be achieved.

## Claims

1. A smart pixel comprising a chiral smectic liquid crystal light modulator (10, 11, 12) including a chiral smectic liquid crystal material (9) disposed between a semiconductor substrate (1) carrying a first electrode (6) and a panel (8) carrying a second electrode (7), first electronic circuitry (2, 3) formed in the semiconductor substrate (1) in the vicinity of the first electrode for changing the state of the liquid crystal material and further electronic circuitry (13, 14) which is such as to provide electrical signal processing and conditioning, characterised in that the further electronic circuitry is formed in the semiconductor substrate in the vicinity of the first electrode, and in that the pixel includes one or more photodetectors (41) arranged such that the pixel can be optically addressed.

2. A smart pixel as claimed in claim 1 wherein the semiconductor (1) is of silicon.

3. A smart pixel as claimed in claim 1 or claim 2 wherein the further electronic circuitry (13, 14) is formed by VLSI technology.

4. A smart pixel as claimed in any one of claims 1 to 3 wherein the further electronic circuitry (Fig. 11) includes means which perform logic functions on input optical signals.

5. A smart pixel as claimed in claim 4 and including means for the input of electrical control signals (E) to the further electronic circuitry, which logic function is performed being determined by the applied electrical control signal.

6. A smart pixel as claimed in claim 4 and wherein the further electronic circuitry includes memory registers (13), which logic function is performed being determined by control codes stored in the memory registers.

7. A smart pixel as claimed in any one of the preceding claims wherein the chiral smectic liquid crystal material is a ferro-electric effect or electroclinic effect material.

8. A device comprising an array of smart pixels, each as claimed in any one of the preceding claims, and including means whereby electronic signals are transmitted between the smart pixels.

9. A device as claimed in claim 8 and wherein whilst each smart pixel performs identical local functions, the array may perform different logic functions dependent on the interconnection of said smart pixels.

10. A device as claimed in claim 9 and including optical signal transmission means between the pixels in the array for the carriage of information between the logic functions of the pixels.

## Patentansprüche

1. Intelligentes Pixel mit einem chiral-smektischen Flüssigkristall-Lichtmodulator (10, 11, 12), der ein chirales smektisches Flüssigkristallmaterial (9) einschließt, das zwischen einem eine erste Elektrode (6) tragenden Halbleitersubstrat (1) und einer eine zweite Elektrode (7) tragenden Platte (8) angeordnet ist, eine erste in dem Halbleitersubstrat (1) in der Nähe der ersten Elektrode ausgebildete elektronische Schaltung (2, 3) zur Änderung des Zustandes des Flüssigkristallmaterials und eine weitere elektronische Schaltung (13, 14) einschließt, die derart ist, daß sie eine elektrische Signalverarbeitung und Aufbereitung ergibt, dadurch gekennzeichnet, daß die weitere elektronische Schaltung in dem Halbleitersubstrat in der Nähe der ersten Elektrode ausgebildet ist, und daß das Pixel ein oder mehrere Photodetektoren (41) einschließt, die derart angeordnet sind, daß das Pixel optisch adressierbar ist.

2. Intelligentes Pixel nach Anspruch 1, bei dem der Halbleiter (1) aus Silizium besteht.

3. Intelligentes Pixel nach Anspruch 1 oder 2, bei dem die weitere elektronische Schaltung (13, 14) durch VLSI-Technologie gebildet ist.

4. Intelligentes Pixel nach einem der Ansprüche 1 bis 3, bei dem die weitere elektronische Schaltung (Fig. 11) Einrichtungen einschließt, die Logikfunktionen an optischen Eingangssignalen ausführen.

**5.** Intelligentes Pixel nach Anspruch 4, das Einrichtungen für die Eingabe von elektrischen Steuersignalen (E) an die weitere elektronische Schaltung einschließt, wobei durch das angelegte elektrische Steuersignal bestimmt wird, welche Logikfunktion ausgeführt wird.

**6.** Intelligentes Pixel nach Anspruch 4, bei dem die weitere elektronische Schaltung Speicherregister (13) einschließt, wobei die von ihr ausgeführte Logikfunktion durch Steuercodes bestimmt ist, die in den Speicherregistern gespeichert sind.

**7.** Intelligentes Pixel nach einem der vorhergehenden Ansprüche, bei dem das chiral-smektische Flüssigkristallmaterial ein Material mit ferroelektrischem Effekt oder mit elektroclinischem Effekt ist.

**8.** Bauteil mit einer Gruppe von intelligenten Pixeln, jeweils gemäß einem der vorhergehenden Ansprüche, wobei das Bauteil Einrichtungen einschließt, durch die elektronische Signale zwischen den intelligenten Pixeln übertragen werden.

**9.** Bauteil nach Anspruch 8, bei dem zwar jedes intelligente Pixel identische Logikfunktionen ausführt, die Anordnung unterschiedliche Logikfunktionen in Abhängigkeit von der Verbindung der intelligenten Pixel ausführen kann.

**10.** Bauteil nach Anspruch 9, das optische Signalübertragungseinrichtungen zwischen den Pixeln in der Anordnung für die Überführung von Informationen zwischen den Logikfunktionen der Pixel einschließt.

## Revendications

**1.** Elément d'image intelligent comprenant un modulateur (10, 11, 12) de lumière à cristaux liquides smectiques chiraux, contenant une matière cristalline liquide smectique chirale (9) disposée entre un substrat semiconducteur (1) portant une première électrode (6) et un panneau (8) portant une seconde électrode (7), un premier circuit électronique (2, 3) formé dans le substrat semiconducteur (1) au voisinage de la première électrode et destiné à changer l'état de la matière cristalline liquide, et un circuit électronique supplémentaire (13, 14) qui est tel qu'il assure une préparation et un traitement de signaux électriques, caractérisé en ce que le circuit électronique supplémentaire est formé sur le substrat semiconducteur au voisinage de la première électrode, et en ce que l'élément d'image comporte un ou plusieurs photodétecteurs (41) disposés de manière que l'élément d'image puisse être adressé optiquement.

**2.** Elément d'image intelligent selon la revendication 1, dans lequel le semi-conducteur (1) est le silicium.

**3.** Elément d'image intelligent selon la revendication 1 ou 2, dans lequel le circuit électronique supplémentaire (13, 14) est formé par la technologie VLSI.

**4.** Elément d'image intelligent selon l'une quelconque des revendications 1 à 3, dans lequel le circuit électronique supplémentaire (figure 11) comporte un dispositif destiné à exécuter des fonctions logiques sur des signaux optiques d'entrée.

**5.** Elément d'image intelligent selon la revendication 4, comprenant un dispositif destiné à l'entrée de signaux de commande électrique (E) dans le circuit électronique supplémentaire, et la fonction logique exécutée est déterminée par le signal de commande électrique qui est appliqué.

**6.** Elément d'image intelligent selon la revendication 4, dans lequel le circuit électronique supplémentaire comprend des registres (13) de mémoire, et la fonction logique réalisée est déterminée par des codes de commande conservés dans les registres de mémoire.

**7.** Elément d'image intelligent selon l'une quelconque des revendications précédentes, dans lequel la matière cristalline liquide smectique chirale est une matière à effet ferroélectrique ou à effet électroclinique.

**8.** Dispositif comprenant une matrice d'éléments d'image intelligents, chacun selon l'une quelconque des revendications précédentes, comprenant un dispositif par lequel des signaux électroniques sont transmis entre les éléments d'image intelligents.

**9.** Dispositif selon la revendication 8, dans lequel, alors que chaque élément d'image intelligent exécute des fonctions locales identiques, la matrice peut exécuter des fonctions logiques différentes qui dépendent de l'interconnexion des éléments d'image intelligents.

**10.** Dispositif selon la revendication 9, comprenant un dispositif de transmission de signaux optiques entre les éléments d'image de la matrice pour le transport d'informations entre les fonctions logiques des éléments d'image.

# Fig .1.

# Fig .2.

ELECTRONIC INPUT/OUTPUT
FROM PERIPHERAL CIRCUITRY

OPTICAL
INPUT/OUTPUT
(WHITE/READ)

PIXEL

ELECTRONIC INPUT/OUTPUT
FROM NEIGHBOURING PIXELS

# Fig .3.

COLUMN j DATA    CLOCK

ENABLE

ROW i

SIGNIFICANT
PLACE SIGNAL

MEMORY
REGISTER    13

PARALLEL
DATA BUS

11

12

10

14

LIQUID CRYSTAL
DRIVE SIGNAL

SWITCHED RESISTANCE
NETWORK ( OR DAC )

*Fig.4.*

*Fig.5.*

*Fig.6.*

13

# Fig.7.

V$_{BIAS}$

41

42

ENABLE

43

MEMORY LATCH

CK OR COMPLEMENT

44

45

48

47

46

CK

INCIDENT LIGHT
REFLECTED LIGHT

# Fig.8.

42

43

44

CK

EP 0 405 815 B1

## Fig. 9.

# Fig. 10a

INPUT IMAGE

INPUT IMAGE

51

52

53

OUTPUT IMAGE
( e.g. □ or + )

54

55

# Fig. 10b

B'

55

57

56

51

54

52

53

B'

Fig.10c

Fig. 11.

EP 0 405 815 B1

*Fig.12.*

## Fig. 13.

| ELECTRICAL INPUTS | | | OPTICAL INPUTS | | | | OPTICAL OUTPUT | OPTICAL OPERATION OR FUNCTION |
|---|---|---|---|---|---|---|---|---|
| $E(1)$ | $E(2)$ | $E(3)$ | $B(i+l,j)$ | $B(i,j)$ | $B(i+l,j)$ | $B(i+l,j)$ | $M(i,j)$ | |
| 0 | 0 | 0 | X | X | X | X | 0 | CLEAR |
| 0 | l | 0 | X | $B(i,j)$ | X | X | $\overline{B}(i,j)$ | COMPLEMENT |
| l | 0 | 0 | X | X | $B(i+l,j)$ | X | $\overline{B}(i+l,j)$ | SHIFT COMPLEMENT |
| l | l | 0 | X | $B(i,j)$ | $B(i+l,j)$ | X | $\overline{B}(i,j)+\overline{B}(i+l,j)$ $[=\overline{B(i,j)\cdot B(i+l,j)}]$ | NAND |
| 0 | 0 | l | X | X | X | X | l | SET |
| 0 | l | l | X | $B(i,j)$ | X | X | $B(i,j)$ | IDENTITY |
| l | 0 | l | X | X | $B(i+l,j)$ | X | $B(i+l,j)$ | SHIFT $(i+l)\longrightarrow i$ |
| l | l | l | X | $B(i,j)$ | $B(i+l,j)$ | X | $\overline{\overline{B}(i,j)+\overline{B}(i+l,j)}$ $=B(i,j)\cdot B(i+l,j)$ | AND |

X = DON'T CARE VALUE ( LOGIC 'O' OR 'l' )

B = O OR l

EP 0 405 815 B1